# EUROPEAN PATENT APPLICATION

(11) **EP 1 936 513 A2**
(43) Date of publication of application: **25.06.2008**
(21) Application number: 07122337.4
(22) Date of filing: 05.12.2007
(51) Int. Cl.: G06F 13/42

(54) **Broadcasting data on a peripheral component interconnect bus**

(30) Priority: 15.12.2006 US 611628
(71) Applicant: GE Fanuc Automation Americas, Inc., Charlottesville, VA 22911 (US)
(72) Inventor: Riley, Joseph D., Warrenton, VA 20186 (US); Tuso, Michael J., Afton, VA 22920 (US)
(74) Representative: Bedford, Grant Richard

(57) **Abstract**

A method for broadcasting data on a peripheral component interconnect bus (10) includes coupling at least one master agent (22), at least one responding target agent (28) and at least one snooping target agent (30) to the peripheral component interconnect bus, transmitting a standard PCI master agent signal from the master agent (22) to the responding target agent (28), transmitting a standard PCI responding target agent signal, driven by the responding target agent, from the responding target agent to the master agent and monitoring the standard PCI master agent signal and the standard PCI responding target agent signal using the snooping target agent (30).

## Description

This invention relates generally to peripheral component interconnect busses, and more particularly, to a method of broadcasting data on peripheral component interconnect busses.

For some known computer system applications it may be necessary for one device of the computerized system to send a given set of data to several other devices in the same computerized system. Peripheral component interconnect (PCI) bus specifications are designed to accommodate transactions including a single master agent and a single target agent. Consequently, known PCI specifications require a single master device to perform the same memory write transaction for each of several devices, when sending a given set of data to several other devices.

In one aspect according to the present invention, a method for broadcasting data on a peripheral component interconnect bus is provided. The method includes coupling at least one master agent, at least one responding target agent and at least one snooping target agent to the peripheral component interconnect bus, transmitting a standard PCI master agent signal from the master agent to the responding target agent, transmitting a standard PCI responding target agent signal, generated and transmitted by the responding target agent, from the responding target agent to the master agent, and monitoring the standard PCI master agent signal and the standard PCI responding target agent signal using the snooping target agent.

In another aspect, a system for increasing the transaction efficiency over a peripheral component interconnect bus is provided. The system includes at least one master agent, at least one responding target agent and at least one snooping target agent, the agents are configured to communicate over the peripheral component interconnect bus. The responding target agent is configured to generate a standard PCI responding target agent signal and transmit the signal to the master agent, and the snooping target agent is configured to monitor the standard PCI responding target agent signal.

In yet another aspect, an apparatus including a peripheral component interconnect bus including at least a target control line is provided. The apparatus also includes at least one master agent, at least one responding target agent and at least one snooping target agent, the agents are configured to communicate over the peripheral component interconnect bus. The responding target agent is configured to generate a standard PCI responding target agent signal and transmit the signal to the master agent over the target control line. The snooping target agent is configured to monitor the standard PCI responding target agent signal.

Various aspects and embodiments of the present invention will now be described in connection with the accompanying drawings, in which:
Figure 1 is a block diagram of a known PCI bus system; and
Figure 2 is a block diagram of an exemplary PCI bus system.

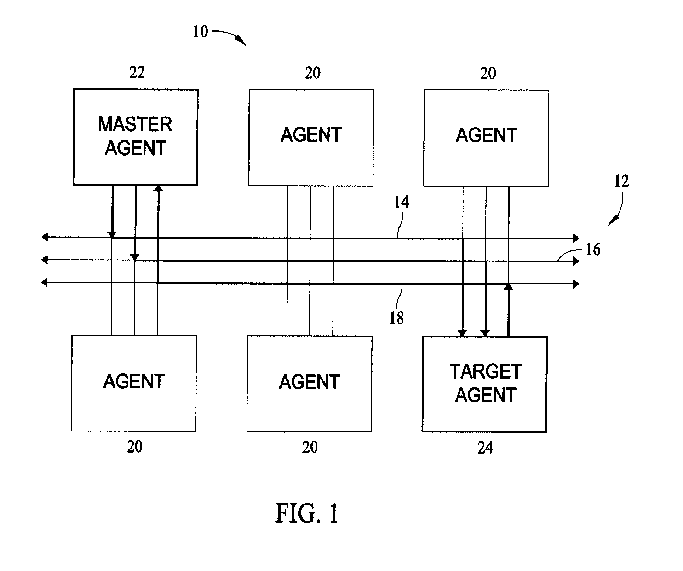

Figure 1 shows a block diagram of a known peripheral component interconnect (PCI) bus system 10. More specifically, PCI bus system 10 includes a PCI bus 12 that includes a data bus 14, at least one master control line 16 and at least one target control line 18. PCI bus system 10 also includes agents 20 coupled to data bus 14, at least one master control line 16 and at least one target control line 18. It should be understood that any device connected to PCI bus 12 that can communicate using a PCI protocol is considered a PCI agent 20. PCI bus 12 enables communication between a single master agent 22 and a single target agent 24.

Master agent 22 is a device included as part of a computerized system that initiates communication for data transfer. Target agent 24 is also a device included as part of the computerized system, and is the device that master agent 22 communicates with for data transfer.

PCI bus 12 includes a different signal for data bus 14, master control lines 16 and target control lines 18. Data bus 14 facilitates transferring data signals from a single master agent 22 to a single target agent 24. Data signals contain the data or information communicated between a single master agent 22 and a single target agent 24. During memory write transactions, data signals are generated and transmitted by a single master agent 22 and monitored by a single target agent 24.

At least one master control line 16 facilitates transmitting master control signals from a single master agent 22 to a single target agent 24. Master control signals contain information other than data, such as, but not limited to, indicating the beginning or ending of a transaction and when valid data is available on the data signals. During memory write transactions, master control signals are also generated and transmitted by a single master agent 22 and are monitored by a single target agent 24.

At least one target control line 18 facilitates transmitting signals from a single target agent 24 to a single master agent 22. Target signals are generated and transmitted by a single target agent 24 and monitored by a single master agent 22. Target signals contain information indicating target agent 24 is ready to receive data from master agent 22. During memory write transactions, target agent 24 uses target signals to indicate it is ready to receive data from master agent 22. It should be understood that during a memory write transaction, a single master agent 22 sends data and information over data bus 14 and at least one master control line 16, respectively. A single target agent 24 responds to the transaction, or communication, over at least one target control line 18 while all other agents 20 remain idle.

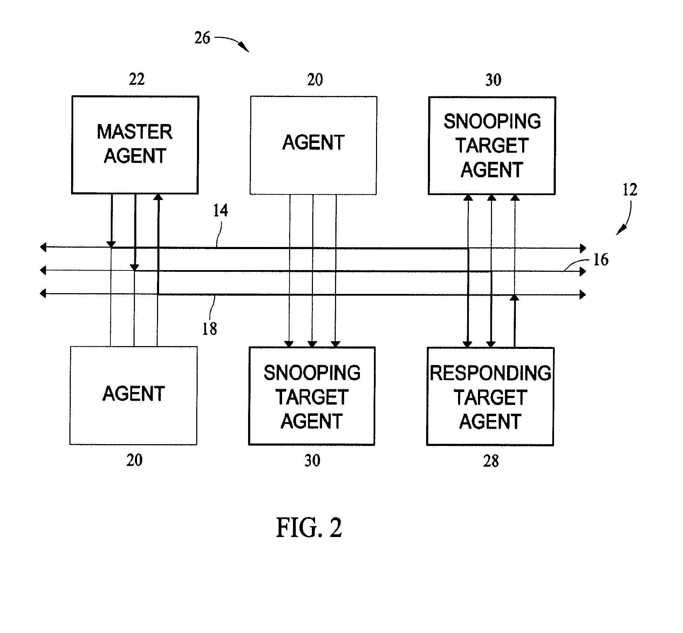

Figure 2 is a block diagram of an exemplary embodiment of PCI bus system 26 according to one embodiment of the invention. Components illustrated in Figure 1, are identified in Figure 2 using the same reference numerals used in Figure 1. More specifically, in the exemplary embodiment, at least one master agent 22, at least one responding target agent 28 and at least one snooping target agent 30 are coupled to data bus 14, at least one master control line 16 and at least one target control line 18. A single responding target agent 28 receives information transmitted from a single master agent 22 on data bus 14 and at least one master control line 16, as described above. Additionally, the single responding target agent 28 responds to the transaction using target control signals transmitted over at least one target control line 18 as described above. It should be understood that PCI system 26 functions according to a standard PCI specification. The PCI standard specification includes predefined signals, such as, but not limited to, data signals, master control signals and target signals, that are used for communicating over data bus 14, master control lines 16 and target control lines 18, respectively. Sideband signals are other signals, not included in the standard PCI specification, that are otherwise added to supplement the standard PCI specification. It should be appreciated that in the exemplary embodiment data bus 14 includes 32 individual data lines. Further, it should be appreciated that although the exemplary embodiment is described as including 32 data lines, in other embodiments, data bus 14 may include any number of data lines that enable PCI bus system 22 to function as described herein.

During operation, a single PCI master agent 22 sends a broadcast transfer by performing a memory write transaction on PCI bus 12 to an address within a reserved broadcast address range. A single designated responding target agent 28 accepts the memory write transaction in full compliance with the PCI specification. Other snooping target agents 30 may receive the broadcast message by snooping on the memory write transaction.

Snooping target agents 30 do not directly participate in broadcast transactions, or communications. Instead, snooping target agents 30 listen to the communications by electronically monitoring the data and other information transmitted over data bus 14, at least one master control line 16 and at least one target control line 18. Thus, snooping target agents 30 effectively receive a copy of the data, or information, transmitted from a single master agent 22 to a single responding target agent 28 over data bus 14, at least one master control line 16 and at least one target control line 18. Consequently, data and other information generated by a single master agent 22 is simultaneously broadcast over data bus 14 and at least one master control line 16 to a single responding target agent 28 and all snooping target agents 30. Likewise, snooping target agents 30 effectively receive a copy of the information transmitted from a single responding target agent 28 to a single master agent 22 over data bus 14, at least one master control line 16 and at least one target control line 18. The information from a single responding target agent 28 transmitted over data bus 14, and control lines 16 and 18, is also simultaneously transmitted to a single master agent 22 and effectively transmitted to all snooping target agents 30. It should be understood that snooping target agents 30 may record the received data, but do not respond using the PCI control signals reserved for master agents 22 or designated responding target agents 28.

It should be appreciated that in other embodiments, snooping target agents 30 may also function as responding target agents 28 or master agents 22. Moreover, responding target agents 28 may also function as snooping target agents 30 or master agents 22. Furthermore, it should be appreciated that in other embodiments master agents 22 may function as snooping target agents 30 or responding target agents 28.

It should be understood that the exemplary embodiment functions in accordance with, and conforms to, standard electrical and mechanical PCI specifications. Thus, the exemplary embodiment does not include or require sideband signals. Furthermore, sideband signals are not compatible with standard PCI electrical and mechanical system specifications. It should be appreciated that although the exemplary embodiment does not include sideband signals, the signals transmitted over data bus 14 and control lines 16 and 18 may be any other kind of signal included in the standard PCI specification that enables PCI bus system 26 to function as described herein. By using signals other than sideband signals, the exemplary embodiment of PCI bus system 26 is able to be used with standard electrical and mechanical systems.

The exemplary embodiment uses designated responding target agents 28 to respond to broadcast transactions in full compliance with PCI bus system 26 specifications. Consequently, the exemplary embodiment permits using commercially available PCI bus system 26 hardware for both master agents 22 and designated responding target agents 28. It should be appreciated that, snooping target agents 30 are generally not commercially available. Moreover, it should be appreciated that although snooping target agents 30 are not generally commercially available, in the exemplary embodiment, snooping target agents 30 may be implemented using configurable logic devices, such as, but not limited to, FPGA and ASIC devices.

Simultaneously communicating data from a single master target agent 22 in a single transaction over data bus 14 and at least one master control line 16 to a single responding target agent 28 and snooping target agents 30, facilitates increasing the transaction efficiency of PCI bus system 26. Moreover, existing commercially available PCI hardware may accommodate these simultaneous communications without changing PCI bus system interfaces of master agents 22 or of responding target agents 28. Furthermore, PCI bus systems 26 do not require modifications, such as, but not limited to, changing motherboards and backplanes, to host agents that support PCI broadcasts because additional signals are not required to facilitate simultaneously broadcasting to all agents 20 and 24.

It should be appreciated that each exemplary embodiment uses existing commercially available PCI hardware without changing existing PCI bus system interfaces of transmitting and receiving agents. Further, existing PCI bus systems do not require modifications to host agents that support PCI broadcasts because additional signals are not required to facilitate simultaneously broadcasting to all target agents.

In each embodiment, the above described PCI bus system facilitates simultaneously transmitting the same signal to several receiving agents. More specifically, in each embodiment at least one snooping target agent listens to communications between a single master agent and a single responding target agent, so that the master agent transmits one signal that is effectively received by all target agents. As a result, the transmission efficiency of PCI bus system communications increases because the time required for communicating data to several target agents decreases and the amount of bus bandwidth required to communicate the data also decreases. Accordingly, system performance and component useful life are each facilitated to be enhanced in a cost effective and reliable manner.

While the invention has been described in terms of various specific embodiments, those skilled in the art will recognize that the invention can be practiced with modification within the spirit and scope of the claims.

## Claims

1. A method for broadcasting data on a peripheral component interconnect bus (10), said method comprising:
coupling at least one master agent (22), at least one responding target agent (28) and at least one snooping target agent (30) to the peripheral component interconnect bus;
transmitting a standard PCI master agent signal from the master agent (22) to the responding target agent (28);
transmitting a standard PCI responding target agent signal, generated and transmitted by the responding target agent, from the responding target agent to the master agent; and
monitoring the standard PCI master agent signal and the standard PCI responding target agent signal using the snooping target agent (30).

2. A method in accordance with Claim 1 further comprising transmitting the standard PCI master agent signal over at least one of a data bus (14) and a master control line (16).

3. A method in accordance with any preceding Claim wherein transmitting the standard PCI responding target agent signal further comprises responding to the standard PCI master agent signal.

4. A system (26) for increasing the transaction efficiency over a peripheral component interconnect bus, said system comprising:
at least one master agent (22), at least one responding target agent (28) and at least one snooping target agent (30), said agents configured to communicate over said peripheral component interconnect bus, wherein said responding target agent (28) is configured to generate a standard PCI responding target agent signal and transmit the signal to said master agent (22), said snooping target agent (30) is configured to monitor the standard PCI responding target agent signal.

5. A system (26) in accordance with Claim 4 wherein said responding target agent (28) is configured to transmit the standard PCI responding target agent signal over a target control line.

6. A system (26) in accordance with Claim 4 or Claim 5 wherein said peripheral component interconnect bus further comprises at least a data bus (14), at least one master control line (16) and at least one target control line.

7. A system (26) in accordance with any one of Claims 4 to 6 wherein said master agent (22) is configured to transmit a standard PCI master agent signal from said master agent to said responding target agent (28).

8. An apparatus comprising:
a peripheral component interconnect bus comprising at least a target control line; and
at least one master agent (22), at least one responding target agent (28) and at least one snooping target agent (30), said agents configured to communicate over said peripheral component interconnect bus, wherein said responding target agent is configured to generate a standard PCI responding target agent signal and transmit the signal to said master agent over said target control line, said snooping target agent is configured to monitor the standard PCI responding target agent signal.

9. An apparatus in accordance with Claim 8 wherein said responding target agent (28) is configured to generate and transmit the standard PCI responding target agent signal in response to a standard PCI master agent signal.

10. An apparatus in accordance with Claim 8 or Claim 9 wherein said master agent (22) is configured to transmit a standard PCI master agent signal to initiate a transmission.
